# FASCICULE DE BREVET EUROPEEN

(11) **EP 3 169 199 B1**
(45) Date de publication et mention de la délivrance du brevet: **16.02.2022**
(21) Numéro de dépôt: 15748287.8
(22) Date de dépôt: 10.07.2015
(51) Int. Cl.: A47J 27/08, F24C 7/08, G05B 15/02, G08C 17/02

(54) **SYSTÈME D'ASSISTANCE A L'UTILISATION D'UN APPAREIL ÉLECTROMÉNAGER**
VORRICHTUNG ZUR UNTERSTÜTZUNG DER VERWENDUNG EINES ELEKTRISCHEN HAUSHALTSGERÄTES
SYSTEM FOR ASSISTING THE USE OF AN ELECTRODOMESTIC APPLIANCE

(30) Priorité: 17.07.2014 FR 1456922
(43) Date de publication de la demande: 24.05.2017
(73) Titulaire: SEB S.A., 69130 Ecully (FR)
(72) Inventeur: HOUNI, Karim, 69007 Lyon (FR); ABERBACHE, Belkacem, 74150 Rumilly (FR)
(74) Mandataire: SEB Développement
(86) Numéro de dépôt international: PCT/FR2015/051922
(87) Numéro de publication internationale: WO 2016/009138

(56) Documents cités:
- EP-A1- 1 263 167
- FR-A1- 2 931 648

## Description

### DOMAINE TECHNIQUE

La présente invention se rapporte au domaine technique général des ustensiles de cuisine du type récipients de cuisson, et en particulier au secteur des autocuiseurs, c'est-à-dire des marmites de cuisson sous pression destinées à assurer la cuisson sous pression de vapeur des aliments contenus en leur sein.

La présente invention concerne plus particulièrement un ensemble comprenant un système d'assistance à l'utilisation d'un appareil électroménager au moyen d'une application adaptée pour être exécutée par un terminal informatique indépendant dont dispose un utilisateur, ledit système comprenant un module émetteur conçu pour être embarqué sur ledit appareil électroménager ainsi que des moyens de télécommunication conçus pour établir une connexion sans fil entre lesdits terminal informatique et module émetteur. Ledit ensemble comprenant en outre ledit terminal informatique indépendant et ladite application.

L'invention concerne par ailleurs un procédé d'assistance à l'utilisation d'un appareil électroménager au moyen d'une application exécutée par un terminal informatique indépendant dont dispose un utilisateur, un module émetteur étant embarqué sur ledit appareil électroménager, ledit procédé comprenant l'établissement d'une connexion sans fil entre lesdits terminal informatique et module émetteur.

L'invention concerne enfin un produit programme d'ordinateur comprenant un moyen de code de programme informatique adapté pour exécuter les étapes d'un procédé d'assistance à l'utilisation d'un appareil électroménager lorsque ledit programme est exécuté par un ordinateur.

### TECHNIQUE ANTERIEURE

On connaît des appareils électroménagers conçus pour fonctionner selon des séquences prédéterminées, éventuellement paramétrables. De telles séquences de fonctionnement se composent généralement d'une suite de phases distinctes qui se déroulent les unes après les autres, de façon automatique, semi-automatique ou manuelle (dans ces deux derniers cas, une intervention de l'utilisateur à une ou plusieurs reprises s'avère nécessaire).

À titre d'exemple de tels appareils électroménagers, on peut notamment citer les appareils de cuisson d'aliments sous pression de vapeur, souvent désignés par l'appellation « *autocuiseurs ».* Les autocuiseurs se composent habituellement d'une cuve destinée à accueillir les aliments à cuire et d'un couvercle destiné à être rapporté et verrouillé sur la cuve pour former avec cette dernière une enceinte de cuisson étanche. Une telle enceinte de cuisson est destinée à être soumise à l'influence d'une source de chauffe (comme par exemple une plaque de cuisson) de manière à permettre sa montée en pression et en température et ainsi la cuisson sous pression des aliments contenus dans cette dernière. Le fonctionnement de ces autocuiseurs connus est gouverné par différents organes capables d'assurer différentes fonction (verrouillage / déverrouillage, régulation de pression, décompression...). Chacune de ces fonctions peut être commandée par l'utilisateur grâce à un ou plusieurs moyens de commande correspondant destinés à être actionnés manuellement par l'utilisateur. On connaît en particulier un autocuiseur domestique doté d'un sélecteur manuel permettant à l'utilisateur de commander manuellement la décompression de l'enceinte de cuisson, ainsi que le réglage du tarage de la soupape de régulation en fonction notamment de la nature des aliments à cuire. Dans cet autocuiseur connu, le sélecteur manuel en question est ainsi monté mobile entre plusieurs positions, savoir une première position correspondant au déclenchement de la décompression de l'enceinte de cuisson et une ou plusieurs autre(s) position(s) correspondant à un (ou plusieurs) niveau(x) de consigne de pression. A ce sélecteur manuel viennent s'ajouter des organes de commande du verrouillage / déverrouillage du couvercle relativement à la cuve et un minuteur programmable dont le déclenchement est piloté par un capteur de température.

Compte tenu de ce qui précède, l'utilisation d'un tel autocuiseur peut apparaître de prime abord relativement complexe, rébarbative et/ou anxiogène pour un utilisateur normalement averti, qui souhaite utiliser un tel autocuiseur dans un contexte familial. La relative complexité de pilotage d'un tel autocuiseur, qui permet par ailleurs d'obtenir, lorsqu'il est correctement utilisé, des résultats de cuisson tout à fait remarquables, tant sur le plan organoleptique que nutritionnel, conduit au risque de voir l'utilisateur être incapable d'utiliser l'autocuiseur de façon optimale et de tirer pleinement partie de tous ses avantages.

En définitive, les autocuiseurs domestiques modernes connus à ce jour présentent des performances de cuisson remarquables, au prix toutefois d'une conception qui peut apparaître complexe à leurs utilisateurs, de sorte que ces derniers (ou du moins certains d'entre eux) pourraient ne pas exploiter au maximum de leurs fonctionnalités les autocuiseurs en question. Ce déficit d'ergonomie et de clarté d'information peut même conduire l'utilisateur, dans certaines situations, à ne pas utiliser correctement son autocuiseur (l'utilisateur pensant par exemple avoir lancé un cycle de cuisson sous pression alors qu'il a laissé, sans s'en apercevoir, son autocuiseur en position de décompression) voire même entraîner, dans le cas le plus critique et en combinaison avec d'autres facteurs, un risque éventuel d'accidents, notamment par brûlures.

Afin de surmonter les différents inconvénients exposés ci-avant, il a été proposé un système d'autocuiseur à utilisation assistée qui tire parti du fait que les terminaux informatiques mobiles, du genre ordiphone ou tablette tactile, sont désormais très répandus. Le système en question repose ainsi sur la mise en oeuvre d'une application d'assistance à l'utilisation qui communique avec l'autocuiseur par l'intermédiaire d'une liaison sans fil établie entre le terminal informatique sur lequel est exécutée l'application et l'autocuiseur. L'application peut ainsi collecter des données en provenance de l'autocuiseur et utiliser ces données de fonctionnement pour assister l'utilisateur dans l'utilisation de l'autocuiseur, en lui indiquant par exemple les manipulations qu'il doit effectuer à différentes étapes du cycle de cuisson et en vérifiant que ces manipulations ont été correctement effectuées.

Un tel système procure ainsi une assistance d'aide à l'utilisation particulièrement intuitive, ergonomique et efficace, du moins dans le cadre d'un fonctionnement normal. Il existe toutefois des situations où le système d'assistance à l'utilisation évoqué ci-avant peut se révéler inopérant, et même source de confusion pour l'utilisateur.

Tel est le cas notamment lorsque la communication sans fil entre le terminal portable et l'appareil électroménager (en l'espèce l'autocuiseur) est interrompue, temporairement ou définitivement, alors que l'appareil électroménager est en train de fonctionner, et en particulier est en train de fonctionner selon une séquence de fonctionnement particulière (c'est-à-dire un cycle de cuisson spécifique, dans le cadre d'un autocuiseur). Il existe de multiples raisons pour que l'exécution de l'application soit interrompue, temporairement ou définitivement, ou désynchronisée par rapport au déroulement de la séquence de fonctionnement en cours. De tels dysfonctionnements peuvent provenir de la survenance de différents événements (distance trop importante entre l'autocuiseur et le terminal portable sur lequel est exécutée l'application d'assistance ; perturbation électromagnétique de la communication sans fil ; arrêt du terminal en raison d'un défaut d'alimentation d'énergie (batterie déchargée)...). Dans de telles situations de fonctionnement anormal ou d'arrêt de fonctionnement de l'application, l'assistance à l'utilisateur n'est plus assurée, ce qui peut entraîner des erreurs dans la manipulation de l'autocuiseur (ou de tout autre appareil électroménager concerné). En outre, dans le cas où l'interruption de fonctionnement n'est que momentanée, il existe un risque pour que l'assistance à l'utilisation procurée par l'application soit alors désynchronisée par rapport au déroulement du cycle réel de fonctionnement de l'appareil électroménager (c'est-à-dire du cycle de cuisson s'agissant d'un autocuiseur). Dans ce cas, le système pourrait induire l'utilisateur en erreur en l'incitant à accomplir, à des moments inopportuns, des manipulations (réduction de la puissance de chauffe, décompression...) inappropriées.

Il est également connu du document EP1263167A1 une installation domotique visant à contrôler chaque appareil électroménager de l'installation (chauffage, grille-pain, alarme, lampe, TV,...) à partir d'une télécommande. Ce système dispose d'un accusé de réception des messages envoyés vers les appareils par le biais d'une liaison sans fil. Un tel système permet de canaliser un retour d'information d'une pluralité d'appareil sur un même dispositif.

Il est également connu du document FR2931648A1 un autocuiseur équipé de différents capteurs, d'un processeur et d'un transmetteur destiné à interagir, grâce à une liaison sans fil, avec un module portable que l'utilisateur peut disposer dans sa poche. Un tel autocuiseur permet d'introduire de la redondance pour sécuriser davantage le fonctionnement de l'autocuiseur.

Cependant, de tels appareils électroménagers ne présentent pas un mode de fonctionnement utilisant des données sur le fonctionnement de l'appareil électroménager pour définir un mode de fonctionnement de l'appareil électroménager.

Enfin, aucun de ces systèmes ne prévoit un autre mode de fonctionnement en cas de rupture de la connexion sans fil.

### EXPOSE DE L'INVENTION

Les objets assignés à l'invention visent en conséquence à porter remède aux différents inconvénients énumérés précédemment et à proposer un ensemble comprenant un nouveau système d'assistance à l'utilisation d'un appareil électroménager, en particulier un autocuiseur, qui tout en étant particulièrement simple, intuitif et ergonomique est également particulièrement fiable, robuste et capable d'assurer un niveau minimal d'assistance à l'utilisation, même dans des conditions de fonctionnement particulièrement détériorées.

Un autre objet de l'invention vise à proposer un ensemble comprenant un nouveau système d'assistance à l'utilisation d'un appareil électroménager, en particulier un autocuiseur, qui présente une excellente « *résilience »* de fonctionnement, lui permettant de fournir une prestation d'assistance à l'utilisation optimale, même si des interruptions ou perturbations de fonctionnement sont intervenues.

Un autre objet de l'invention vise à proposer un ensemble comprenant un nouveau système d'assistance à l'utilisation d'un appareil électroménager, en particulier un autocuiseur, qui fonctionne selon un principe particulièrement simple et universel, adaptable à différents types d'appareils électroménagers.

Un autre objet de l'invention vise à proposer un ensemble comprenant un nouveau système d'assistance à l'utilisation d'un appareil électroménager, en particulier un autocuiseur, dont l'utilisation est extrêmement aisée et ne nécessite aucun apprentissage particulier préalable ni compétence ou aptitude particulière.

Un autre objet de l'invention vise à proposer un ensemble comprenant un nouveau système d'assistance à l'utilisation d'un appareil électroménager, en particulier un autocuiseur, particulièrement agréable et intuitif à utiliser et qui limite les possibilités pour l'utilisateur de commettre des erreurs.

Un autre objet de l'invention vise à proposer un ensemble comprenant un nouveau système d'assistance à l'utilisation d'un appareil électroménager, en particulier un autocuiseur, capable de procurer une assistance à l'utilisation pendant tout le cycle de fonctionnement, et ce même si le propre fonctionnement du système a été interrompu ou perturbé temporairement.

Un autre objet de l'invention vise à proposer un ensemble comprenant un nouveau système d'assistance à l'utilisation d'un appareil électroménager, en particulier un autocuiseur, capable de fonctionner de façon autonome et automatique.

Un autre objet de l'invention vise à proposer un ensemble comprenant un nouveau système d'assistance à l'utilisation d'un appareil électroménager, en particulier un autocuiseur, de construction particulièrement simple, robuste et peu onéreuse.

Un autre objet de l'invention vise à proposer un ensemble comprenant un nouveau système d'assistance à l'utilisation d'un appareil électroménager, en particulier un autocuiseur, capable de procurer de manière automatique une assistance particulièrement élaborée, conviviale et ergonomique.

Un autre objet de l'invention vise à proposer un ensemble comprenant un nouveau système d'assistance à l'utilisation d'un appareil électroménager, en particulier un autocuiseur, qui repose sur la mise en oeuvre de moyens techniques compacts, éprouvés et peu onéreux.

Un autre objet de l'invention vise également à proposer un ensemble comprenant un nouvel ensemble comprenant un système d'assistance à l'utilisation d'un appareil électroménager, un terminal informatique indépendant et une application destinée à être exécutée par ledit terminal informatique, qui soit particulièrement fiable, facile à mettre en œuvre, de fonctionnement fiable et robuste, et peu onéreux.

Un autre objet de l'invention vise à proposer un ensemble comprenant un nouveau procédé d'assistance à l'utilisation d'un appareil électroménager particulièrement fiable, facile à mettre en oeuvre et bon marché.

Les objets assignés à l'invention sont atteints à l'aide d'un ensemble comprenant un système d'assistance à l'utilisation d'un appareil électroménager au moyen d'une application adaptée pour être exécutée par un terminal informatique indépendant dont dispose un utilisateur, ledit système comprenant un module émetteur conçu pour être embarqué sur ledit appareil électroménager ainsi que des moyens de télécommunication conçus pour établir une connexion sans fil entre lesdits application et module émetteur, ledit système étant caractérisé en ce qu'il comprend également un moyen de contrôle conçu pour détecter une éventuelle rupture de ladite connexion sans fil, ledit module émetteur étant conçu pour fonctionner selon au moins :
- un mode normal, qui est actif tant que ledit moyen de contrôle ne détecte pas de rupture de ladite connexion sans fil, et selon lequel le module émetteur est adapté pour surveiller et/ou récolter et/ou générer un premier jeu de données concernant le fonctionnement de l'appareil électroménager pour lequel il est adapté à transmettre en partie ou en totalité à l'application, grâce à ladite connexion sans fil, afin que ladite application puisse utiliser au moins certaines des données dudit premier jeu de données pour son exécution; et
- un mode dégradé, qui est actif tant que ledit moyen de contrôle détecte une rupture de ladite connexion sans fil, et selon lequel le module émetteur est adapté pour surveiller et/ou récolter et/ou générer un deuxième jeu de données concernant le fonctionnement de l'appareil électroménager et est adapté pour utiliser de façon autonome au moins certaines desdites données du deuxième jeu de données pour communiquer à l'utilisateur, de façon visuelle et/ou sonore, des informations relatives au fonctionnement de l'appareil électroménager,
- ledit terminal informatique indépendant (4) ;
- et ladite application.

Les objets assignés à l'invention sont également atteints à l'aide d'un procédé d'assistance à l'utilisation d'un appareil électroménager au moyen d'une application exécutée par un terminal informatique indépendant dont dispose un utilisateur, un module émetteur étant embarqué sur ledit appareil électroménager, ledit procédé comprenant l'établissement d'une connexion sans fil entre lesdits terminal informatique et application, ledit procédé étant caractérisé en ce qu'il met en oeuvre une opération de contrôle en vue de détecter une éventuelle rupture de ladite connexion sans fil, ledit module émetteur étant conçu pour fonctionner selon au moins :
- un mode normal, qui est actif tant qu'aucune rupture de ladite connexion sans fil n'est détectée, et selon lequel le module émetteur surveille et/ou récolte et/ou génère un premier jeu de données concernant le fonctionnement de l'appareil électroménager qu'il transmet en partie ou en totalité à l'application, grâce à ladite connexion sans fil, afin que ladite application utilise au moins certaines des données dudit premier jeu de données pour son exécution; et
- un mode dégradé, qui est actif tant qu'une rupture de ladite connexion sans fil est détectée, et selon lequel le module émetteur surveille et/ou récolte et/ou génère un deuxième jeu de données concernant le fonctionnement de l'appareil électroménager et utilise de façon autonome au moins certaines desdites données du deuxième jeu de données pour communiquer à l'utilisateur, de façon visuelle et/ou sonore, des informations relatives au fonctionnement de l'appareil électroménager.

Les objets assignés à l'invention sont enfin atteints à l'aide d'un produit programme d'ordinateur comprenant un moyen de code de programme informatique adapté pour exécuter les étapes d'un procédé conforme à l'invention tel que défini ci-avant lorsque ledit programme est exécuté par un ordinateur.

### DESCRIPTIF SOMMAIRE DES DESSINS

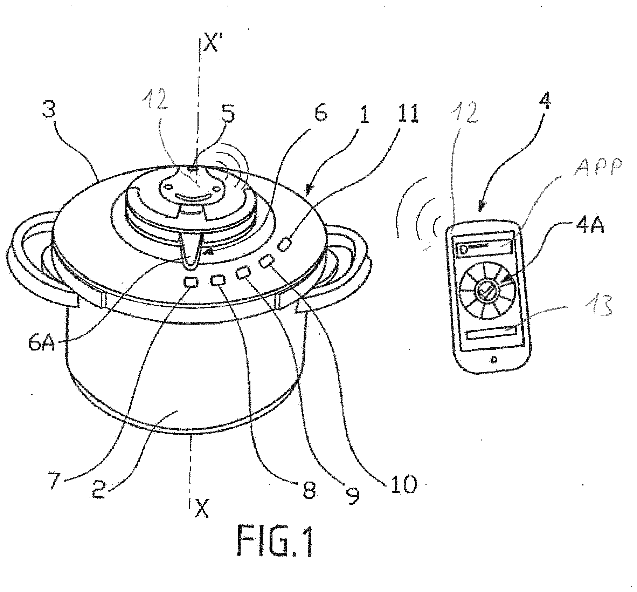

D'autres particularités et avantages de l'invention apparaîtront et ressortiront plus en détails à la lecture de la description faite ci-après, en référence aux dessins annexés, donnés à titre d'exemple illustratif et non limitatif, dans lesquels la figure 1 illustre selon une vue schématique en perspective, un ensemble selon l'invention comprenant (i) un système d'assistance à l'utilisation d'un appareil électroménager (formé en l'espèce par un autocuiseur) au moyen d'une application exécutée par un terminal informatique indépendant (formé en l'espèce par un ordiphone, ou « *smartphone »* en anglais) dont dispose un utilisateur, (ii) ledit terminal informatique indépendant et (iii) ladite application.

### MEILLEURE MANIERE DE REALISER L'INVENTION

Selon un premier aspect, l'invention concerne un système d'assistance à l'utilisation d'un appareil électroménager 1 au moyen d'une application exécutée par un terminal informatique 4 indépendant dont dispose un utilisateur.

Par « *appareil électroménager »* on désigne ici tout dispositif, ustensile ou outil conçu pour assurer une tâche domestique, lesdits dispositifs ou outils pouvant être alimentés par de l'énergie thermique (plaque de cuisson par exemple) et/ou électrique, et/ou manuelle, etc. Le terme *« électroménager »* est donc pris ici dans son acception commune la plus étendue, et n'est donc pas limité spécifiquement à la désignation d'appareils électriques. Dans l'exemple exposé en détails dans ce qui suit et qui est illustré par la figure 1, l'appareil électroménager 1 est un appareil de cuisson d'aliments sous pression que l'on peut également désigner par le terme « *autocuiseur »,* et qui est destiné à cuire des aliments sous pression de vapeur, de préférence dans un contexte familial (appareil domestique). L'invention n'est cependant absolument pas limitée à une telle application et peut concerner tout autre appareil électroménager, que ce dernier soit destiné à assurer une fonction culinaire (friteuse, cuiseur à riz, machine à pain, yaourtière, sorbetière, cafetière, four, cuiseur-vapeur, robot multifonctions...) ou autres (ventilateur, aspirateur, centrale vapeur, chauffage d'appoint...). L'invention trouve notamment tout particulièrement son intérêt lorsqu'elle sert à assister un utilisateur dans l'utilisation d'un appareil électroménager susceptible de fonctionner selon des séquences (ou cycles) prédéterminés et éventuellement paramétrables, tels que des cycles de cuisson lorsque l'appareil électroménager est un autocuiseur.

Dans le mode de réalisation préférentiel illustré à la figure 1, l'appareil de cuisson d'aliments sous pression formant l'appareil électroménager 1 est avantageusement un autocuiseur domestique, qui présente donc en particulier un caractère portatif (c'est-à-dire déplaçable manuellement) et indépendant. Avantageusement, l'autocuiseur en question est passif thermiquement, c'est-à-dire qu'il est conçu pour monter en pression sous l'effet d'une source de chauffe indépendante qui lui est extérieure, telle qu'une plaque de cuisson. Il est cependant tout à fait envisageable, sans pour autant que l'on sorte du cadre de l'invention, que la source de chauffe fasse partie de l'autocuiseur 1 (comme c'est le cas pour les autocuiseurs électriques). Comme cela est bien connu en tant que tel, l'autocuiseur 1 comprend une cuve 2 formant un récipient de cuisson et présentant avantageusement sensiblement une symétrie de révolution selon un axe vertical central X-X'. La cuve 2 est par exemple fabriquée par emboutissage d'un flan en matériau métallique tel que l'aluminium ou l'acier inoxydable. Un fond thermo-conducteur peut avantageusement être rapporté, par exemple par frappe à chaud, sur le fond du récipient obtenu par emboutissage, afin de former une cuve 2 équipée d'un fond thermo-conducteur. L'autocuiseur 1 comprend également un couvercle 3 destiné à être rapporté sur la cuve 2 pour former avec cette dernière une enceinte de cuisson sensiblement étanche, c'est-à-dire suffisamment hermétique pour permettre une montée en pression significative en son sein, par exemple à un niveau excédant la pression atmosphérique d'une valeur comprise entre 4 kPa et 150 kPa. Le couvercle 3 est avantageusement réalisé en un matériau métallique (par exemple en acier inoxydable) et affecte préférentiellement une forme générale discoïde, complémentaire de la forme de la cuve 2 à laquelle il est associé pour former l'enceinte de cuisson. Le couvercle 3 est conçu pour pouvoir être verrouillé / déverrouillé à volonté relativement à la cuve 2, le verrouillage du couvercle 3 permettant à l'enceinte de monter en pression sans échappement du couvercle 3 sous l'effet de la pression interne à l'autocuiseur. A cette fin, l'autocuiseur formant l'appareil électroménager 1 comprend un moyen de verrouillage / déverrouillage du couvercle 3 sur la cuve 2, qui peut être en l'espèce de tout type connu (système de verrouillage à étrier, à baïonnettes, à mâchoires, à segments, etc.). Le moyen de verrouillage / déverrouillage peut par exemple être susceptible d'évoluer entre une configuration de verrouillage du couvercle 3 relativement à la cuve 2 dans laquelle le couvercle 3 est solidarisé à la cuve 2 de façon à autoriser la montée en pression, et une configuration de déverrouillage du couvercle 3 relativement à la cuve 2 dans laquelle le couvercle 3 peut être librement séparé de la cuve 2, par l'utilisateur, de façon manuelle. De préférence, ledit appareil de cuisson d'aliments sous pression est également pourvu d'une soupape de régulation de pression, conçue pour maintenir la pression dans l'enceinte de cuisson (formée par l'association du couvercle 3 et de la cuve 2) à un niveau prédéterminé de consigne appelé pression de fonctionnement. De préférence, ladite soupape de régulation de pression est une soupape de régulation de pression tarée à tarage réglable, de sorte que le niveau de consigne est réglable par réglage du tarage. De préférence, ledit appareil de cuisson d'aliments sous pression comprend par ailleurs un organe de décompression, permettant à l'utilisateur de faire chuter la pression au sein de l'enceinte, notamment en fin de processus de cuisson, pour que l'utilisateur puisse ouvrir le couvercle 3 dans des conditions de sécurité acceptables.

Le terminal informatique indépendant 4 est quant à lui totalement distinct et indépendant de l'appareil électroménager 1. Il présente avantageusement un caractère portatif et est de préférence conçu pour pouvoir être transporté et manipulé à une ou deux mains par un utilisateur. De préférence, le terminal informatique 4 est constitué par un ordiphone (en anglais « *smartphone »),* une tablette tactile (du genre Apple iPad ^{®}) ou un ordinateur portable, et est de préférence équipé de la technologie Bluetooth ^{®}, et en particulier de la technologie Bluetooth 4. 0 « *low energy* »^{®}. Le terminal informatique indépendant 4 se présente ainsi sous la forme d'un ordinateur, étant entendu que ce terme générique doit être ici considéré dans son acception la plus étendue, c'est-à-dire recouvrant non seulement les ordinateurs classiques (ordinateur de bureau ou portable de type « *laptop* ») mais également les tablettes à écran tactile et les ordiphones, tous ces appareils étant capables d'interpréter et d'exécuter des programmes informatiques et des applications, ce qui justifie leur appellation *« ordinateur ».* Par « *application* » on désigne ici un logiciel applicatif destiné à procurer, lorsqu'il est exécuté sur le terminal informatique indépendant 4, une assistance à l'utilisation de l'appareil électroménager 1, en produisant par exemple des informations de toutes natures (sonores et/ou visuelles, interactives ou non) afin de guider l'utilisateur dans son utilisation de l'appareil électroménager 1, de préférence en temps réel, à la manière d'un « *coach* » virtuel. De préférence, le terminal informatique indépendant 4 est pourvu d'un écran d'affichage 4A et/ou de haut-parleurs permettant de communiquer à l'utilisateur de façon visuelle et/ou sonore, les informations d'assistance à l'utilisation précitées. Les informations produites par l'application exécutée par le terminal informatique indépendant 4 peuvent également inclure des informations de commande, qui ne sont pas nécessairement destinées à être intelligibles par l'utilisateur pour le guider dans son utilisation, mais peuvent par exemple influer directement sur le fonctionnement de l'appareil électroménager. L'application exécutée par le terminal informatique indépendant 4 peut donc avantageusement produire des informations audiovisuelles destinées à guider l'utilisateur dans son utilisation de l'appareil électroménager 1, et/ou produire des signaux de commande qui pilotent, ou contribuent à piloter, directement, le fonctionnement de l'appareil électroménager 1.

Le système d'assistance à l'utilisation conforme à l'invention comprend également un module émetteur 5 conçu pour être embarqué sur ledit appareil électroménager 1, ainsi que des moyens de télécommunications 12 conçus pour établir une connexion sans fil entre ladite application exécutée par le terminal informatique 4 et ledit module émetteur 5.

Le module émetteur 5 est avantageusement attaché, de manière permanente ou amovible, à l'appareil électroménager 1, et se présente de préférence sous la forme d'un sous-ensemble unitaire, monobloc qui peut par exemple être attaché et détaché manuellement et à volonté de l'appareil électroménager 1. Le module émetteur 5 est de préférence embarqué sur le couvercle 3 de l'autocuiseur formant avantageusement l'appareil électroménager 1, comme illustré à la figure 1. Le module émetteur 5 intègre avantageusement des moyens électroniques de traitement de données, du genre micro-processeur ou micro-contrôleur. La connexion sans fil établie entre ladite application et le module émetteur 5 peut être réalisée par tout moyen connu permettant de relier sans contact le module émetteur 5 et le terminal informatique 4 afin de permettre un échange de données entre eux. De préférence, ladite connexion sans fil est une connexion par ondes électromagnétiques, et de préférence par ondes radioélectriques, infrarouges ou autres, autorisant (sans liaison physique du genre fil ou câble entre le terminal 4 et le module émetteur 5) un transfert de données analogiques et/ou numériques entre le module émetteur 5 et l'application, via le terminal informatique 4. De façon préférentielle, lesdits moyens de télécommunication 12 mettent en œuvre une liaison entre le module émetteur et le terminal informatique qui est conforme à la norme « *Bluetooth 4. 0 low energy* ^{®} ». La connexion sans fil est donc dans ce cas une liaison Bluetooth ^{®} reposant de façon particulièrement avantageuse sur le protocole « *Bluetooth 4. 0 low energy* ^{®} ». Cela signifie bien entendu que dans ce cas préférentiel, à la fois le module émetteur 5 et le terminal informatique 4 embarquent lesdits moyens de télécommunication 12, lesquels reposent sur la technologie Bluetooth ^{®} pour réaliser une communication sans contact ni liaison filaire entre l'application et le module émetteur 5. De préférence, ladite communication est bidirectionnelle, auquel cas le module émetteur 5 constitue un module émetteur/récepteur tandis que le terminal informatique 4 est également pourvu de moyens d'émission/réception, permettant ainsi un transfert bidirectionnel de données numériques ou analogiques entre l'application exécutée par le terminal informatique 4 et le module émetteur 5.

Le système selon l'invention comprend également un moyen de contrôle 13 conçu pour détecter une éventuelle rupture de ladite connexion sans fil. Par « *rupture* » on désigne toute interruption partielle ou totale de la connexion, ou perturbation de cette dernière, qui empêche un échange normal et/ou complet de données entre le module émetteur 5 et l'application exécutée par le terminal 4. Une telle rupture peut découler par exemple de la survenance d'un ou plusieurs des événements suivants, cités à titre purement illustratif et non limitatif :
- distance trop importante entre l'appareil 1 et le terminal 4 sur lequel est exécutée l'application ;
- perturbation électromagnétique de la connexion sans fil en raison du fonctionnement d'un autre appareil à proximité de l'appareil électroménager 1 et/ou du terminal 4;
- arrêt intempestif de l'exécution de l'application sur le terminal 4;
- arrêt intempestif du terminal 4, par exemple en raison d'un défaut d'alimentation d'énergie (batterie déchargée) ;
- arrêt ou dysfonctionnement du terminal 4 suite à un dysfonctionnement de nature logicielle (« *bug* système ») ou matérielle...

Avantageusement, le moyen de contrôle 13 en question fait partie de la technologie Bluetooth ^{®} 4.0 *(« low energy »),* laquelle permet en effet par elle-même une surveillance permanente de l'état de la connexion sans fil afin de signaler immédiatement toute rupture ou dégradation significative de cette dernière et émettre un signal d'alerte en ce sens, ledit signal d'alerte pouvant par exemple être traité par le module émetteur 5 en vue de déclencher, de préférence automatiquement, un processus approprié, comme exposé ci-après. Le module émetteur 5 est conçu pour fonctionner selon au moins :
- un mode normal, qui est actif tant que le moyen de contrôle 13 ne détecte pas de rupture de ladite connexion sans fil, et selon lequel le module émetteur 5 surveille et/ou récolte et/ou génère un premier jeu de données concernant le fonctionnement de l'appareil électroménager 1, qu'il transmet en partie ou en totalité à l'application, grâce à ladite connexion sans fil, afin que ladite application utilise au moins certaines des données dudit premier jeu de données pour son exécution ; et
- un mode dégradé, qui est actif tant que ledit moyen de contrôle 13 détecte une rupture de ladite connexion sans fil, et selon lequel le module émetteur 5 surveille et/ou récolte et/ou génère un deuxième jeu de données concernant le fonctionnement de l'appareil électroménager 1 et utilise de façon autonome au moins certaines desdites données du deuxième jeu de données pour communiquer à l'utilisateur, de façon visuelle et/ou sonore, des informations relatives au fonctionnement de l'appareil électroménager 1.

De préférence, ledit module émetteur 5 est conçu pour signaler par lui-même à un utilisateur, au moyen d'un signal sonore et/ou visuel, la présence ou l'absence de la connexion sans fil, afin que l'utilisateur puisse savoir si le système se trouve dans le mode normal ou dans le mode dégradé. Ainsi, le système d'assistance à l'utilisation conforme à l'invention repose préférentiellement sur le schéma général de fonctionnement normal suivant :
- le module émetteur 5 est relié fonctionnellement à l'appareil électroménager 1, ce qui lui permet notamment d'accéder localement à des paramètres de fonctionnement de l'appareil électroménager 1, susceptible de faire partie du premier jeu de données susvisé;
- le premier jeu de données en question, qui contient avantageusement des informations sur le fonctionnement, à un instant donné, de l'appareil électroménager 1, est transmis par le module émetteur 5, via la connexion sans fil établie entre le module émetteur 5 et le terminal 4, à l'application en train d'être exécutée par le terminal informatique 4.
- ladite application tient compte alors de tout ou partie des données en question pour fournir à l'utilisateur des informations d'assistance à l'utilisation de l'appareil électroménager 1, au travers par exemple d'une interface graphique affichée sur l'écran 4A du terminal 4.

Dans l'hypothèse où le moyen de contrôle 13 détecte une rupture de la connexion sans fil, le module émetteur 5 n'est plus en mesure d'échanger normalement des données avec l'application, laquelle n'est donc elle-même plus capable d'assurer sa fonction d'assistance à l'utilisation, puisqu'elle ne peut plus tenir compte de l'état de fonctionnement instantané de l'appareil électroménager 1. Dans ce cas, l'application n'est plus liée fonctionnellement à l'appareil électroménager 1, ce qui peut bien entendu engendrer des problèmes d'utilisation sérieux.

Afin de remédier à cette difficulté, le module émetteur 5 est alors conçu pour fonctionner selon le mode dégradé susvisé, tant que la connexion sans fil entre l'appareil électroménager 1 et le module émetteur 5 est rompue. Lorsqu'il fonctionne selon ce mode dégradé, le module émetteur 5 est toujours relié fonctionnellement à l'appareil électroménager 1 de sorte qu'il est en particulier capable de poursuivre la collecte de données concernant le fonctionnement de l'appareil 1, et d'utiliser localement ces données (qui correspondent au deuxième jeu de données susvisées) pour émettre par lui-même (à la place du sous-ensemble terminal 4 / application), sous la forme de signaux visuels et/ou sonores, des informations permettant d'assister l'utilisateur dans l'utilisation de l'appareil électroménager 1.

Ainsi, l'assistance à l'utilisation procurée par le système selon l'invention est assurée par le sous-ensemble terminal 4 / application en fonctionnement normal (mode normal) et directement par le module émetteur 5 lui-même en fonctionnement anormal (perte de la liaison fonctionnelle entre le terminal informatique 4 et l'appareil électroménager 1), c'est-à-dire en mode dégradé. Avantageusement, le module émetteur 5 est conçu pour transmettre à ladite application, dès que la connexion sans fil est rétablie après une rupture de connexion, au moins un signal de reconfiguration incluant au moins tout ou certaines desdites données dudit deuxième jeu de données, ladite application étant capable d'utiliser les données du signal de reconfiguration pour reprendre le cours normal de son exécution qui avait été interrompue par ladite rupture de connexion. Grâce à cette caractéristique technique préférentielle, le système est capable, lorsque la connexion sans fil est rétablie après interruption, de basculer automatiquement du mode dégradé au mode normal et de tenir compte du fonctionnement de l'appareil électroménager 1 pendant que le mode dégradé était actif pour la poursuite de l'exécution de l'application en mode normal. Par exemple, dans le cas préférentiel où l'appareil électroménager 1 est constitué par un autocuiseur, le module émetteur 5 est avantageusement conçu pour indiquer à l'application, par l'intermédiaire de la connexion sans fil et au moment où cette dernière est rétablie, quelle est la phase de cuisson en cours, afin que l'application puisse en tenir compte pour délivrer par la suite des informations d'assistance à l'utilisation de l'autocuiseur, et ne pas fournir des informations inadaptées en redémarrant à zéro ou en reprenant simplement le cours de son exécution là où il s'était arrêté lors de la rupture intempestive de la connexion sans fil, ce qui conduirait à désynchroniser l'exécution de l'application et le déroulement du cycle de cuisson.

Avantageusement, l'appareil électroménager 1 est doté d'un sélecteur de commande 6 déplaçable manuellement, et par exemple mobile entre une pluralité de positions correspondant respectivement à une pluralité d'état de fonctionnement de l'appareil électroménager 1. Le sélecteur de commande 6 permet avantageusement à un utilisateur de piloter une ou plusieurs des fonctions de l'appareil électroménager 1. Dans le mode de réalisation illustré aux figures, où l'appareil électroménager 1 est un appareil de cuisson d'aliments sous pression, le sélecteur de commande 6 est destiné à commander manuellement une ou plusieurs des fonctions de l'appareil de cuisson d'aliments sous pression.

Par exemple, comme illustré, le sélecteur de commande 6 est destiné à commander manuellement au moins le réglage du tarage de la soupape de régulation tarée à tarage réglable dont est de préférence pourvu l'appareil de cuisson d'aliments sous pression formant en l'espèce l'appareil électroménager 1. Dans l'exemple illustré, le sélecteur de commande 6 est avantageusement destiné à commander manuellement également l'organe de décompression dont est de préférence pourvu l'appareil de cuisson d'aliments sous pression. Dans ce mode de réalisation avantageux illustré par la figure 1, le sélecteur de commande 6 se présente de préférence sous la forme d'un curseur 6A monté à rotation selon un axe sensiblement vertical, qui correspond en l'espèce à l'axe X-X' de révolution de la cuve 2. Dans l'exemple illustré, le curseur 6A est conçu pour se déplacer entre différentes positions prédéterminées, associées chacune à des marquages d'identification 7, 8, 9, 10, 11 respectifs positionnés sur l'appareil de cuisson sous pression, par exemple à la surface du couvercle 3 (de façon à être parfaitement visible par l'utilisateur) selon une disposition prédéterminée. Chacune desdits positions correspond à une fonctionnalité spécifique et les marquages d'identification 7, 8, 9, 10, 11 sont conçus pour permettre à l'utilisateur d'identifier quelle fonctionnalité est associée à chaque position indexée du curseur 6A. Par exemple, le premier marquage d'identification 7 correspond à l'activation de la décompression de l'appareil, tandis que les deuxième, troisième, quatrième et cinquième marquages d'identification 8, 9, 10, 11 correspondent respectivement à quatre valeurs de consignes de pression de fonctionnement (c'est-à-dire quatre niveaux de tarage de la soupape de régulation) différents, adaptés à différents types d'aliments (légumes, féculents, viandes, poissons).

Ainsi, lorsque le curseur 6A pointe vers le marquage d'identification 7, la décompression de l'appareil de cuisson d'aliments sous pression est commandée, de sorte que l'intérieur de l'enceinte de cuisson est mis en communication avec l'extérieur pour faire chuter la pression régnant dans l'enceinte et la ramener à la pression atmosphérique. Au contraire, lorsque le curseur 6A pointe vers l'un ou l'autre des deuxièmes, troisième, quatrième ou cinquième marquages d'identification 8, 9, 10, 11, l'appareil de cuisson sous pression est alors placé en configuration de cuisson sous pression, c'est-à-dire que l'enceinte de cuisson est fermée de façon étanche de sorte que l'intérieur de l'enceinte ne peut communiquer avec l'extérieur que par l'intermédiaire de la soupape de régulation dont le tarage (dont dépend la valeur de consigne de la pression de fonctionnement) est réglé à un niveau prédéterminé associé à la position prédéterminée du curseur 6A.

De préférence, la position instantanée du sélecteur de commande 6 fait partie du premier jeu de données et/ou du deuxième jeu de données, et de préférence fait partie du premier jeu de données et du deuxième jeu de données. En d'autres termes, dans ce mode de réalisation préférentiel, le module émetteur 5 est conçu pour surveiller en permanence la position du sélecteur de commande 6 et est ainsi capable de déterminer en temps réel (au moyen de capteurs de position, par exemple des capteurs de type C-MOS destiné à être excités par un aimant embarqué dans le sélecteur de commande 6) dans quelle position prédéterminée se trouve ledit sélecteur de commande 6. Le module émetteur 5 est également capable dans ce cas de communiquer cette information de position instantané du sélecteur de commande 6 à l'application exécutée par le terminal informatique 4, par l'intermédiaire de la connexion sans fil. Cette information est avantageusement transmise par le module émetteur 5 à l'application exécutée par le terminal informatique 4 en mode normal, afin que l'application puisse connaître à tout instant dans quelle position se trouve le sélecteur de commande 6, mais également dès que la connexion sans fil est rétablie après une rupture de connexion, de façon que l'application puisse alors tenir immédiatement compte de la position instantanée dans laquelle se trouve le sélecteur de commande 6.

En outre, lorsque le module émetteur 5 fonctionne en mode dégradé, le module émetteur 5 est avantageusement conçu pour surveiller en permanence la position du sélecteur de commande 6 afin que le module émetteur 5 puisse tenir compte en temps réel de la position instantanée du sélecteur de commande 6 pour communiquer à l'utilisateur, de façon visuelle et/ou sonore, des informations relatives au fonctionnement de l'appareil de cuisson d'aliments sous pression formant en l'occurrence l'appareil électroménager 1. Ainsi, la position instantanée du sélecteur de commande 6 fait de préférence partie des informations qu'utilise l'application (en mode normal) ou le module 5 lui-même (en mode dégradé) pour procurer une assistance à l'utilisation de l'appareil électroménager 1.

Avantageusement, l'appareil électroménager est capable de mettre en œuvre une pluralité de séquences de fonctionnements prédéterminées différentes, incluant elles-mêmes chacune une série respective de phases successives. De préférence, des paramètres caractéristiques de chacune desdites séquences de fonctionnements prédéterminées sont enregistrées dans l'application, de façon que cette dernière puisse inviter un utilisateur à sélectionner une séquence de fonctionnement prédéterminée. Dans le cas préférentiel où l'appareil électroménager 1 est un appareil de cuisson d'aliments sous pression, ce dernier est avantageusement capable de mettre en œuvre une pluralité de cycles de cuisson correspondant avantageusement à ladite pluralité de séquences de fonctionnements prédéterminées et incluant eux-mêmes chacun une série respective d'étapes de cuisson correspondant à ladite série respective de phases successives. De préférence, chaque cycle de cuisson est associé à une recette de cuisine correspondante que l'utilisateur peut sélectionner au moyen de l'application.

Avantageusement, chaque série d'étapes de cuisson inclut au moins une étape de cuisson sous pression au cours de laquelle l'appareil de cuisson sous pression régule la pression régnant en son sein pour qu'elle soit maintenue sensiblement à une valeur de consigne, ladite valeur de consigne étant avantageusement réglable par réglage du tarage de la soupape de régulation tarée équipant préférentiellement l'appareil de cuisson sous pression. Chaque cycle de cuisson comprend préférentiellement une première étape de montée en pression, suivie d'une deuxième étape de cuisson sous pression, au cours de laquelle la pression régnant au sein de l'enceinte est maintenue à un niveau de consigne prédéterminé, chaque cycle du cuisson se poursuivant par une troisième étape de décompression au cours de laquelle la pression régnant dans l'enceinte de cuisson chute pour revenir progressivement à la pression atmosphérique. Chaque cycle de cuisson se distingue des autres cycles de cuisson par exemple par la durée de chaque étape et/ou par la valeur de consigne pour l'étape de cuisson sous pression.

De préférence, l'application est conçue pour informer l'utilisateur du début et/ou de la fin d'une ou plusieurs desdites phases successives formant la séquence de fonctionnement prédéterminée mise en œuvre par l'appareil électroménager 1, lorsque le module émetteur 5 de ce dernier fonctionne en mode normal.

Avantageusement, ledit module émetteur 5 est par ailleurs capable, lorsqu'il fonctionne en mode dégradé, d'informer par lui-même l'utilisateur, de façon visuelle et/ou sonore, du début et/ou de la fin d'au moins l'une desdites phases de la séquence de fonctionnement prédéterminée que ledit appareil électroménager 1 en train de mettre en œuvre. De préférence, lesdites séquences de fonctionnement prédéterminées sont chacune identifiées par un code d'identification, une séquence de fonctionnement prédéterminée particulière pouvant être sélectionnée au moyen de l'application, via l'interface de commande (écran tactile, clavier ou autre) dont est équipé le terminal informatique 4. L'application est avantageusement conçue pour commander la transmission dudit code d'identification de la séquence de fonctionnement ainsi sélectionnée au module émetteur 5 par l'intermédiaire de la connexion sans fil. Le module émetteur 5 dispose avantageusement d'une mémoire conçue pour stocker, au moins temporairement, ledit code d'identification, de sorte que le module émetteur 5 dispose localement dudit code d'identification même si la connexion sans fil est ultérieurement interrompue. Ainsi, dans ce mode de réalisation préférentiel, l'invention est avantageusement conçue pour permettre à l'utilisateur de sélectionner, via l'application, une séquence de fonctionnement prédéterminée, parmi une pluralité de séquences de fonctionnements disponibles, ladite séquence prédéterminée ainsi sélectionnée étant caractérisée par différents paramètres incluant par exemple la durée de chaque phase composant la séquence ainsi que d'autres paramètres relatifs à la mise en œuvre de chaque phase (valeur de consignes particulières, etc.). Avantageusement, l'application héberge à cet effet une base de données qui associe chaque séquence de fonctionnement prédéterminée à un code d'identification. Ce code d'identification est transmis, dès la sélection, au moyen de l'application, de la séquence de fonctionnement prédéterminée correspondante par l'utilisateur, au module émetteur 5, lequel sauvegarde ainsi le code d'identification sélectionné, en vue par exemple de l'utiliser lui-même directement en mode dégradé ou de le communiquer à l'application, après un retour au mode normal consécutif à un fonctionnement en mode dégradé, pour le cas où l'événement responsable du passage en mode dégradé aurait conduit l'application à perdre le code d'identification correspondant à la séquence de fonctionnement prédéterminée sélectionnée préalablement par l'utilisateur.

De préférence, le signal de reconfiguration inclut ledit code d'identification, de sorte que dès que la connexion sans fil est rétablie après une rupture de connexion, le module émetteur 5 transmet, par le biais du signal de reconfiguration, le code d'identification de la séquence de fonctionnement prédéterminée qui était en cours au moment de ladite rupture de connexion, laquelle peut découler par exemple d'une mise hors tension du terminal informatique 4 (en raison par exemple d'un défaut de charge de la batterie de ce dernier).

Avantageusement, le module émetteur 5 est capable de procéder à l'identification de la phase en cours de déroulement de la séquence de fonctionnement prédéterminée que ledit appareil électroménager 1 est en train de mettre en œuvre, ledit premier jeu de données et/ou ledit deuxième jeu de données incluant des données représentatives de l'identité de ladite phase en cours de déroulement. Grâce à cette caractéristique technique, le module émetteur 5 est capable de communiquer à l'application, en temps réel, l'identité de la phase en cours de déroulement, ce qui permet à l'application de procurer une assistance à l'utilisation optimale. Cette identification de la phase en cours de déroulement est obtenue grâce par exemple à la mise en œuvre de moyens de mesure et/ou de moyens de détection qui déterminent, à partir de l'évaluation de certains paramètres (température, durée, etc.) l'identité de la phase en cours de déroulement.

De façon encore plus préférentielle, le signal de reconfiguration précité inclut lesdites données représentatives de l'identité de ladite phase en cours de déroulement, de sorte que dès que la connexion sans fil est rétablie après une rupture de connexion, le module émetteur 5 peut informer l'application, via le signal de reconfiguration, de l'identité de la phase en cours de déroulement, ce qui permet à l'application de reprendre le cours normal de son exécution.

Dans le mode de réalisation préférentiel selon lequel l'appareil électroménager 1 est un appareil de cuisson d'aliments sous pression capable de mettre en œuvre une étape de cuisson sous pression au cours de laquelle l'appareil 1 régule la pression régnant en son sein pour qu'elle soit maintenue sensiblement à une valeur de consigne, le module émetteur 5 incorpore préférentiellement un dispositif de détection de l'instant où débute ladite étape de cuisson sous pression. Avantageusement, le signal de reconfiguration inclut des données représentatives dudit instant ou débute ladite étape de cuisson sous pression. Grâce à cette caractéristique, le module émetteur 5 est capable, au moment de la reprise du fonctionnement en mode normal après un fonctionnement en mode dégradé, d'indiquer à l'application l'instant où a débuté l'étape de cuisson sous pression, ce qui peut permettre par exemple à l'application de déterminer la durée résiduelle de mise en œuvre de ladite étape de cuisson sous pression. De préférence, ledit dispositif de détection de l'instant où débute ladite étape de cuisson sous pression inclut au moins d'une part un capteur de pression et/ou de température permettant de mesurer respectivement le niveau de pression et/ou de température régnant au sein de l'appareil de cuisson (c'est-à-dire au sein de l'enceinte de cuisson formée par la cuve 2 et le couvercle 3) et d'autre part des moyens de calcul permettant de déterminer automatiquement, à partir desdits niveaux de pression et/ou de température mesurés, ledit instant où débute ladite étape de cuisson sous pression. De préférence, le dispositif de détection est conçu pour détecter l'instant où la pression régnant dans l'autocuiseur atteint pour la première fois sensiblement la valeur de consigne sélectionnée (en espèce au moyen du sélecteur de commande 6), l'instant en question marquant donc le début de l'étape de cuisson sous pression. De préférence, le dispositif de détection est conçu dans ce cas pour fonctionner selon le principe décrit dans le document EP-1 458 268, dont le contenu est incorporé par référence. Dans ce mode de réalisation préférentiel, le dispositif de détection inclut un capteur de température avantageusement disposé dans un, ou au voisinage d'un, conduit d'échappement de vapeur disposé à l'aval de la soupape de régulation de pression, pour permettre audit capteur de température de capter l'augmentation de température résultant de l'échappement de vapeur à travers un conduit, et de produire en réponse un signal de déclenchement. Ce signal de déclenchement fait avantageusement partie du premier jeu de données transmis par le module émetteur 5 à l'application en mode normal. Dans ce cas, l'application est avantageusement conçue pour déclencher, à réception du signal de déclenchement en provenance du module émetteur 5, un décompte d'une durée prédéterminée correspondant en l'espèce à une durée souhaitée de cuisson des aliments à la pression de fonctionnement. Cette durée prédéterminée est avantageusement déterminée automatiquement par le système, en fonction par exemple de la recette suivie par l'utilisateur.

De préférence, le module émetteur 5 incorpore aussi un minuteur conçu pour décompter une durée prédéterminée à partir dudit instant où débute ladite étape de cuisson sous pression. Ainsi, le module émetteur 5 est capable, lorsqu'il fonctionne en mode dégradé, de décompter par lui-même ladite durée prédéterminée grâce au minuteur dont il dispose localement. La durée prédéterminée peut ainsi être décomptée même si le module émetteur 5 ne peut plus communiquer avec l'application. Avantageusement, le module émetteur 5 est conçu pour déterminer la durée résiduelle restant à décompter par le minuteur incorporé au sein du module émetteur 5 au moment où la connexion sans fil est rétablie après avoir été interrompue, le signal de reconfiguration évoqué précédemment incluant dans ce cas des données représentatives de ladite durée résiduelle. Grâce à cette caractéristique, le système peut fonctionner de la manière suivante :
- le système fonctionne tout d'abord normalement, le mode normal du module émetteur 5 étant activé ;
- lorsque le module émetteur 5 détecte, au moyen de son dispositif de détection, l'instant où la pression au sein de l'appareil 1 atteint la valeur de consigne sélectionnée par l'intermédiaire du sélecteur de commande 6, un signal de déclenchement (faisant partie du premier jeu de données) est transmis à l'application, laquelle entreprend en réponse le décompte d'une durée prédéterminée correspondant à la durée requise de cuisson à la pression de consigne sélectionnée ;

- en parallèle, le signal de déclenchement commande également le décompte, par le minuteur incorporé au module émetteur 5, de la même durée prédéterminée, de sorte que l'application d'une part et le module émetteur 5 d'autre part décomptent en parallèle cette durée prédéterminée ;
- si pour une raison quelconque l'exécution de l'application est perturbée au point de déclencher l'activation du mode dégradé, et que ce dernier est toujours actif à l'issue du décompte de la durée prédéterminée par le minuteur incorporé dans le module émetteur, alors le module émetteur 5 est avantageusement conçu pour informer l'utilisateur, de façon visuelle et/ou sonore, que la durée prédéterminée est écoulée, ce qui permet à l'utilisateur d'entreprendre les actions nécessaires (par exemple mise en décompression de l'appareil et extinction de la source de chauffe) ;
- en revanche si le module émetteur 5 repasse du mode dégradé au mode normal alors que le décompte de la durée prédéterminée n'est pas terminé, la durée résiduelle restant à décompter sera immédiatement transmise, au moyen de la liaison sans fil, à l'application, laquelle pourra alors poursuivre le décompte et indiquer ainsi à l'utilisateur la fin du décompte et les démarches appropriées qu'il convient de mettre en œuvre (décompression...).

Avantageusement, la valeur de la durée prédéterminée peut être sélectionnée au moyen de l'application, qui est conçue pour commander la transmission de la valeur ainsi sélectionnée au module émetteur par l'intermédiaire de la connexion sans fil en mode normal, ledit module émetteur 5 disposant d'une mémoire conçue pour stocker ladite valeur sélectionnée, de sorte que le module émetteur 5 dispose localement de ladite valeur sélectionnée même en mode dégradé.

Un exemple de fonctionnement d'un système d'assistance à l'utilisation d'un appareil électroménager 1 conforme au mode de réalisation illustré va être décrit dans ce qui suit.

Dans cet exemple, le système conforme à l'invention consiste en un système d'assistance à l'utilisation d'un appareil de cuisson d'aliments sous pression pourvu d'une soupape de régulation de pression à tarage réglable et d'un sélecteur de commande 6 destiné à commander manuellement la décompression de l'appareil et le réglage du tarage de la soupape de régulation pour sélectionner une valeur de consigne de pression de fonctionnement parmi 4 valeurs prédéterminées correspondant respectivement aux positions repérées par les marquages 8, 9, 10, 11. Dans cet exemple d'utilisation, l'utilisateur souhaite préparer un plat selon une recette contenue dans l'application chargée dans, et destinée à être exécutée par, le terminal informatique 4 dont dispose l'utilisateur. L'utilisateur sélectionne ainsi la recette concernée au moyen d'une interface graphique produite par l'application et affichée sur l'écran 4A du terminal informatique 4, lequel est formé en l'occurrence par un ordiphone. L'utilisateur peut choisir, au moyen de cette interface graphique produite par l'application, de suivre la recette pas-à-pas. Dans ce cas, la recette est associée à une séquence de fonctionnement prédéterminé de l'appareil de cuisson d'aliments sous pression identifiée par un code d'identification spécifique, comme exposé précédemment. La sélection de la recette par l'utilisateur au moyen de l'interface graphique générée par l'application entraîne la transmission au module émetteur 5 dudit code d'identification, afin que ledit module émetteur 5 enregistre dans sa mémoire ledit code d'identification pour pouvoir éventuellement le retransmettre à son tour à l'application après un éventuel passage en mode dégradé. L'interface graphique générée par l'application sur l'écran du terminal informatique 4 est avantageusement conçue pour tout d'abord guider l'utilisateur dans l'établissement de la connexion sans fil entre le module émetteur 5 et le terminal informatique 4, afin de permettre une assistance interactive de l'utilisateur pour la suite de la recette.

À cette fin, l'interface graphique en question invite tout d'abord l'utilisateur à presser d'une part sur un bouton de mise en marche dont est pourvu le module émetteur 5 et d'autre part sur un bouton virtuel de connexion affichée par l'interface graphique visible sur l'écran du terminale informatique 4. Cette double opération conduit à établir une mise en communication de l'appareil 1 et du terminal informatique 4, en l'espèce par le biais de la technologie Bluetooth 4.0 ^{®} comme exposé précédemment. De préférence, le terminal informatique 4 recherche d'abord le signal Bluetooth ^{®} émis par le module émetteur 5 puis établit la connexion, et signale enfin que la connexion est correctement réalisée par un message délivré via l'interface graphique affichée par l'écran du terminal informatique 4 à l'attention de l'utilisateur. Ladite interface graphique est ensuite conçue pour inviter l'utilisateur à déplacer le sélecteur de commande 6 (formé en l'espèce par le curseur 6A) pour le placer dans une position correspondant à un programme de cuisson spécifique, c'est-à-dire à une valeur de consigne appropriée pour la recette concernée. Si l'utilisateur ne défère pas correctement à cette invitation, en laissant par exemple le sélecteur de commande 6 en position de décompression, l'interface graphique générée par l'application est conçue pour afficher un symbole d'erreur et pour réitérer son invitation à déplacer manuellement le sélecteur de commande 6 en regard du marquage 8, 9, 10, 11 correspondant en l'espèce à la valeur de consigne adéquate pour la recette concernée. L'utilisateur procède alors au déplacement du sélecteur de commande 6 de sa position de décompression (marquage 7) à sa position correspondant par exemple à la première valeur de consigne de pression de fonctionnement (dans laquelle il pointe en l'espèce vers le deuxième marquage d'identification 8), ce qui a pour effet concomitant de déplacer, sur l'écran du terminal informatique 4, un pointeur virtuel symbolisant le sélecteur de commande 6 d'une position dans laquelle il pointait vers un premier pictogramme correspondant au premier marquage 7 à une position dans laquelle il pointe vers un deuxième pictogramme correspondant au deuxième marquage 8. L'interface graphique indique alors à l'utilisateur que l'étape de préchauffage (montée en pression de l'appareil) est en cours et l'invite à cet effet à régler sa source de chauffe (plaque de cuisson) à pleine puissance de façon que la valeur de consigne de pression puisse être atteinte au plus vite. Lorsque la valeur de consigne est atteinte, la soupape de régulation s'ouvre pour laisser échapper la vapeur afin de réguler le niveau de pression, ce qui a pour effet de générer une brutale élévation de température au niveau du conduit d'échappement de vapeur disposé à l'aval de la soupape de régulation, élévation qui est détectée par le capteur de température du dispositif de détection équipant le module émetteur 5. Ce dernier émet en retour un signal de déclenchement qui :
- est transmis par la connexion sans fil à l'application, pour déclencher automatiquement le décompte, par l'application, d'une durée prédéterminée correspondant à la durée requise de l'étape de cuisson sous pression ; ce décompte peut avantageusement être affichée sous la forme d'un compte à rebours au moyen d'un affichage virtuel qui fait partie de l'interface graphique générée par l'application exécutée par le terminal informatique 4.
- déclenche localement, au sein du module émetteur 5, le décompte de cette même durée prédéterminée par le minuteur dont est avantageusement pourvu ledit module émetteur 5.

Une fois le décompte terminé, l'application signale à l'utilisateur que l'étape de cuisson sous pression est terminée, par l'intermédiaire par exemple d'une fenêtre incluant un message affiché sur l'écran du terminal informatique 4. L'utilisateur est alors invité à couper la source de chauffe, un message de rappel pouvant avantageusement apparaître à cet effet et ne disparaissant de l'écran du terminal 4 qu'en réponse à une action positive de validation (clic sur un bouton virtuel par exemple) de l'utilisateur. Le système peut alors, dans le cas d'un cycle de cuisson classique, signaler à l'utilisateur (par le biais d'une interface graphique générée par l'application sur l'écran du terminal 4) que la cuisson est terminée et l'inviter en conséquence à placer le sélecteur de commande 6 en position de décompression (identifié par le marquage 7) pour pouvoir ouvrir le couvercle 3 au plus vite. Alternativement, l'appareil de cuisson sous pression peut mettre en œuvre, de manière préférée mais optionnelle, une étape dite de « *cuisson douce* » dans laquelle les aliments continuent de cuire sous l'effet de l'inertie thermique, en restant au sein de l'autocuiseur qui est décompressé et n'est plus soumis à un apport thermique positif de la part de la source de chauffe (hors effet d'inertie thermique), cette dernière étant coupée complètement (c'est-à-dire n'étant plus alimentée en énergie - par exemple électrique - ou combustible - par exemple gaz -). Afin de mettre en œuvre cette phase terminale de « *cuisson douce* », l'utilisateur est invité par l'application, par exemple via un message affiché sur l'écran du terminal informatique 4, à décompresser son autocuiseur en plaçant le sélecteur de commande 6 dans la position idoine (i.e. la position de décompression correspondant au premier marquage d'identification 7). L'utilisateur manipule alors le sélecteur de commande 6 pour l'amener en position de décompression ce qui a pour effet de déplacer simultanément le curseur virtuel affiché par l'application sur l'écran du terminal 4 de façon à ce qu'il pointe vers un pictogramme symbolisant la décompression. Si cette manipulation est correctement effectuée par l'utilisateur, l'interface graphique générée par l'application sur l'écran du terminal informatique 4 signale par un message de validation à l'utilisateur que tout est en ordre. La phase de cuisson douce se poursuit alors et l'utilisateur en est informé de préférence par l'application. Éventuellement, un décompte temporel, visible par l'utilisateur (en étant par exemple affiché sur l'écran du terminal informatique 4) permet à l'utilisateur de connaître la durée prédéterminée de cette étape terminale de « *cuisson douce* », dont la fin lui est avantageusement signalée par un message approprié affiché par l'application sur l'écran du terminal informatique 4, l'invitant de nouveau à s'assurer que la source de chauffe est coupée et que l'autocuiseur n'est pas sous pression. Une fois le cycle de cuisson décrit ci-avant terminé, l'utilisateur peut séparer le couvercle 3 de la cuve 2 et accéder aux aliments cuits.

Dans le cas où, pendant le cycle de cuisson conforme à l'exemple exposé dans ce qui précède, le moyen de contrôle 13 du système détecte une rupture de la connexion sans fil, le module émetteur 5 est conçu pour passer automatiquement en mode dégradé. Dans l'exemple préférentiel exposé ci-avant, le moyen de contrôle 13 fait partie de la technologie Bluetooth 4.0 « *low energy »* ^{®}. Les moyens techniques établissant la liaison sans fil selon le protocole Bluetooth 4.0 low energy ^{®} sont en effet conçus pour émettre immédiatement un signal de perte de connexion, qui déclenche alors automatiquement la désactivation du mode normal et l'activation du mode dégradé de fonctionnement du module émetteur 5. En mode dégradé, le module émetteur 5 fonctionne de la manière suivante.

Un voyant lumineux éclairé en continu par une lumière verte lorsque le module émetteur 5 fonctionne en mode normal se met à clignoter en rouge dès lors et tant que le module émetteur 5 fonctionne en mode dégradé.

Durant le mode dégradé, le module émetteur 5 est conçu pour émettre différents signaux sonores et/ou lumineux prédéterminés pour signaler par exemple:
- l'atteinte de la valeur de consigne de pression programmée (c'est-à-dire l'instant où débute l'étape de cuisson sous pression) ;
- le début de l'étape de « *cuisson douce* » (lorsqu'une telle étape est mise en œuvre) ;
- la fin du cycle de cuisson (à l'issue de l'étape de cuisson sous pression ou à l'issue de l'étape de « *cuisson douce* » si une telle étape est mise en œuvre) ;
- un mauvais positionnement du sélecteur de commande 6, lorsque ce dernier pointe vers un marquage qui ne correspond pas à la consigne de pression requise pour la recette sélectionnée).

De préférence, en mode dégradé, chaque changement de position du sélecteur de commande 6 entraîne en outre la génération d'un signal sonore bref par le module émetteur 5, afin de signaler le changement de position. Dans l'hypothèse où la connexion sans fil serait ensuite rétablie, entraînant automatiquement le retour en mode normal, le module émetteur 5 est avantageusement conçu pour immédiatement transmettre à l'application, de façon automatique, via la connexion sans fil, un signal de reconfiguration incluant par exemple les données suivantes :
- position instantanée du sélecteur de commande 6 ;
- identification de la phase de cuisson en cours (étape de cuisson sous pression ou étape de « *cuisson douce* » par exemple) ;
- durée restant à décompter (pour l'étape de cuisson sous pression ou l'étape de *« cuisson douce ») ;*
- code d'identification du cycle de cuisson correspondant à la recette sélectionnée en cours d'exécution.

Ces différentes informations permettent à l'application exécutée par le terminal informatique 4 de se reconfigurer automatiquement, lorsque la connexion est rétablie, afin de permettre ainsi à l'utilisateur de poursuivre le cycle de cuisson avec l'assistance de l'application.

En cas de nouvelle perte de connexion, le passage en mode dégradé intervient de la même manière que décrite ci-avant, et ce de manière entièrement automatique. Le mode dégradé permet ainsi d'assurer un niveau de sécurité accrue du système d'assistance conforme à l'invention en palliant toute défaillance éventuelle du terminal informatique 4.

Par ailleurs, l'application est conçue pour pouvoir à tout moment interroger (via la connexion sans fil) le module émetteur 5 afin que celui-ci lui retourne, via la connexion sans fil, l'ensemble des informations suivantes que le module émetteur 5 détient localement à l'instant de l'interrogation par l'application :
- Durée prédéterminée requise de l'étape de cuisson sous pression, telle que déterminée par l'application en fonction de la recette choisie, étant entendu que cette durée prédéterminée peut éventuellement avoir été modifiée de façon manuelle par l'utilisateur via l'application.
- Identifiant de l'étape de cuisson en cours (étape de montée en pression, étape de cuisson sous pression ou étape de « *cuisson douce* »). Ces différentes étapes sont avantageusement identifiées grâce à la détection d'un taux prédéterminé d'augmentation de la température en fonction du temps. Tant que ce taux prédéterminé n'a pas été détecté, la soupape de régulation ne s'est pas ouverte et donc l'étape de montée en pression est toujours en cours. Dès que ce taux prédéterminé a été détecté, l'étape de cuisson sous pression démarre pendant une durée prédéterminée décomptée par l'application et/ou le module émetteur 5 ; une fois la durée prédéterminée de cuisson sous pression entièrement décomptée, l'étape de « *cuisson douce* » débute.
- Temps décompté, correspondant à la durée décomptée par le module émetteur 5 depuis l'événement « *détection d'un taux prédéterminé d'augmentation de la température par rapport au temps »* ou à la durée décomptée par le module émetteur 5 à compter du début de l'étape de « *cuisson douce ».*
- État de la pile : niveau d'énergie encore disponible dans la pile alimentant le module émetteur 5, exprimé en pourcentage.
- Position réelle du sélecteur de commande 6, correspondant à la position instantanée dans laquelle se trouve effectivement le sélecteur de commande 6 à l'instant où le module émetteur 5 est interrogé par l'application.
- Température : température instantanée mesurée par ledit capteur de température.
- Détection du taux prédéterminé d'augmentation de la température en fonction du temps : une fois que le module émetteur 5 est relié fonctionnellement au terminal informatique 4 par l'intermédiaire de la connexion sans fil, le module émetteur 5 exécute automatiquement une opération de contrôle de la température mesurée par le capteur de température du dispositif de détection incorporé dans le module émetteur 5. À l'issue de cette opération de contrôle, le module émetteur 5 génère une variable booléenne appelée ci-après « *détection pente »* et qui est à l'état *« vrai* » lorsqu'une variation brusque de cette température (supérieure par exemple à x°C/min, où x est une valeur prédéterminée corrélée à l'ouverture de la soupape de régulation) est détectée.
- Code d'identification du cycle de cuisson correspondant à la recette en cours (ci-après « *code recette* ») de réalisation sélectionnée par l'utilisateur au moyen de l'application, et qui a été transmis au module émetteur 5 pour être enregistré en mémoire par ce dernier, comme exposé précédemment.
- Identifiant du modèle d'appareil de cuisson sous pression (par exemple, lors de la première utilisation du système d'assistance à l'utilisation, l'utilisateur est invité à déclarer par l'application le modèle d'autocuiseur qu'il va utiliser avec le système d'assistance à l'utilisation ; lors de la mise en route du module émetteur 5, l'application communique au module émetteur 5 la référence du modèle d'autocuiseur concerné).
- Position requise du sélecteur de commande 6 (position dans laquelle devrait se trouver le sélecteur de commande 6, en fonction de la recette choisie, au moment où le module émetteur 5 est interrogé par l'application).

L'ensemble de ces informations est avantageusement transmis sous la forme d'une trame de données, par exemple conformément au tableau 1 ci-après.

**Tableau 1**

| **Paramètres** | **Formats** |
|---|---|
| Durée prédéterminée requise de l'étape de cuisson sous pression | Octet(s) Dur_Etap |
| Identifiant de l'étape de cuisson en cours | Octet(s) Ident Etap |
| Temps décompté | Octet(s) T dec |
| Etat de la Pile | Octet(s) Pile |
| Position réelle du sélecteur de commande 6 | Octet(s) Pos Rel |
| Température | Octet(s) T°c |
| Détection pente | Octet(s) Detect P |
| Code recette | Octet(s) Cde |
| Identifiant du modèle d'appareil de cuisson sous pression | Octet(s) Ident Mod |
| Position requise du sélecteur de commande 6 | Octet(s) Pos Req |

Bien entendu, le système d'assistance à l'utilisation décrit dans ce qui précède peut être mis en œuvre avec tout appareil électroménager, et notamment avec tout appareil électroménager susceptible d'utiliser le protocole Bluetooth 4. 0 ^{®} et pouvant s'appuyer sur une trame de communication par exemple analogue à la trame du tableau 1 ci-avant.

L'invention n'est donc absolument pas limitée à une mise en œuvre dédiée à un appareil de cuisson d'aliments sous pression, même si ce mode de réalisation est particulièrement préféré.

L'invention concerne par ailleurs un ensemble comprenant :
- un système d'assistance à l'utilisation conforme à la description qui précède, c'est-à-dire un système d'assistance à l'utilisation d'un appareil électroménager 1 au moyen d'une application exécutée par un terminal informatique 4 indépendant dont dispose un utilisateur ;
- ledit terminal informatique 4 indépendant ;
- et ladite application.

La description exposée ci-avant concernant le système pris seul reste bien entendu valable, *mutatis mutandis,* pour l'ensemble susvisé incluant le système, le terminal et l'application.

L'invention concerne également en tant que tel un procédé d'assistance à l'utilisation d'un appareil électroménager 1 susceptible avantageusement d'être mis en œuvre au moyen du système décrit dans ce qui précède. Le procédé conforme à l'invention constitue ainsi avantageusement un procédé d'assistance à l'utilisation d'un appareil électroménager 1 au moyen d'une application exécutée par un terminal informatique indépendant 4 dont dispose un utilisateur, un module émetteur 5 étant embarqué sur ledit appareil électroménager 1. Le procédé selon l'invention comprend l'établissement d'une connexion sans fil entre lesdits application et module émetteur 5, comme exposé précédemment. Le procédé met en outre en œuvre une opération de contrôle en vue de détecter une éventuelle rupture de ladite connexion sans fil. Le module émetteur 5 est quant à lui conçu pour fonctionner selon au moins :
- un mode normal qui est actif tant qu'aucune rupture de ladite connexion sans fil n'a été détectée, et selon lequel le module émetteur 5 surveille et/ou récolte et/ou génère un premier jeu de données concernant le fonctionnement de l'appareil électroménager 1 qu'il transmet en partie ou en totalité à l'application, grâce à ladite connexion sans fil, afin que ladite application utilise au moins certaines des données dudit premier jeu de données pour son exécution ; et
- un mode dégradé, qui est actif tant qu'une rupture de ladite connexion sans fil est détectée, et selon lequel le module émetteur 5 surveille et/ou récolte et/ou génère un deuxième jeu de données concernant le fonctionnement de l'appareil électroménager 1 et utilise de façon autonome au moins certaines desdites données du deuxième jeu de données pour communiquer à l'utilisateur, de façon visuelle et/ou sonore, des informations relatives au fonctionnement de l'appareil électroménager 1.

Bien entendu, la description qui précède relative d'une part au système d'assistance et d'autre part à l'ensemble correspondant reste valable, *mutatis mutandis,* pour le présent procédé d'assistance à l'utilisation.

Enfin, l'invention concerne également en tant que tel un produit programme d'ordinateur comprenant un moyen de code de programme informatique adapté pour exécuter les étapes d'un procédé conforme à ce qui précède lorsque ledit programme est exécuté par un ordinateur.

L'invention permet ainsi d'optimiser et de fiabiliser un processus d'assistance à l'utilisation d'un appareil électroménager, réalisé de préférence au moyen d'un terminal informatique 4, du genre ordiphone ou tablette à écran tactile, relié fonctionnellement, par une liaison sans contact, à l'appareil électroménager 1 concerné.

### POSSIBILITE D'APPLICATION INDUSTRIELLE

L'invention trouve son application industrielle dans la conception, la mise en œuvre et la fabrication d'appareils électroménagers équipés de systèmes d'assistance à leurs utilisations, notamment tel que celui décrit précédemment.

## Revendications

1. - Ensemble comprenant :
- un système d'assistance à l'utilisation d'un appareil électroménager (1) au moyen d'une application (APP) adaptée pour être exécutée par un terminal informatique indépendant (4)
dont dispose un utilisateur, ledit système
comprenant un module émetteur (5) conçu pour être embarqué sur ledit appareil électroménager (1) ainsi que des moyens de télécommunication (12) conçus pour établir une connexion sans fil entre lesdits application (APP) et module émetteur (5), ledit système étant **caractérisé en ce qu'**il comprend également un moyen de contrôle (13) conçu pour détecter une éventuelle rupture de ladite connexion sans fil, ledit module émetteur (5) étant conçu pour fonctionner selon au moins :
- un mode normal, qui est actif tant que ledit moyen de contrôle (13) ne détecte pas de rupture de ladite connexion sans fil, et selon lequel le module émetteur (5) est adapté pour surveiller et/ou récolter et/ou générer un premier jeu de données concernant le fonctionnement de l'appareil électroménager (1) pour lequel il est adapté à transmettre en partie ou en totalité à l'application (APP), grâce à ladite connexion sans fil, afin que ladite application (APP) puisse utiliser au moins certaines des données dudit premier jeu de données pour son exécution; et
- un mode dégradé, qui est actif tant que ledit moyen de contrôle (13) détecte une rupture de ladite connexion sans fil et/ou un défaut d'exécution de l'application (APP), et selon lequel le module émetteur (5) est adapté pour surveiller et/ou récolter et/ou générer un deuxième jeu de données concernant le fonctionnement de l'appareil électroménager (1) et est adapté pour utiliser de façon autonome au moins certaines desdites données du deuxième jeu de données pour communiquer à l'utilisateur, de façon visuelle et/ou sonore, des informations relatives au fonctionnement de l'appareil électroménager (1),
- ledit terminal informatique indépendant (4) ;
- et ladite application (APP).

2. - Ensemble selon la revendication 1 **caractérisé en ce que** ledit module émetteur (5) est conçu pour transmettre à ladite application (APP), dès que ladite connexion sans fil est rétablie après une rupture de connexion, au moins un signal de reconfiguration incluant au moins toutes ou certaines desdites données dudit deuxième jeu de données, ladite application (APP) étant capable d'utiliser les données dudit signal de reconfiguration pour reprendre le cours normal de son exécution qui avait été interrompu par ladite rupture de connexion.

3. - Ensemble selon la revendication 1 ou 2 **caractérisé en ce que** ledit appareil électroménager (1) est doté d'un sélecteur de commande (6) déplaçable manuellement, la position instantanée dudit sélecteur de commande (6) faisant partie du premier jeu de données et/ou du deuxième jeu de données.

4. - Ensemble selon la revendication 3 **caractérisé en ce que** ledit appareil électroménager (1) est un appareil de cuisson d'aliments sous pression pourvu d'une soupape de régulation de pression tarée à tarage réglable, le sélecteur de commande (6) étant destiné à commander manuellement au moins le réglage du tarage de ladite soupape de régulation.

5. - Ensemble selon l'une des revendications 1 à 4 **caractérisé en ce que** ledit appareil électroménager (1) est capable de mettre en œuvre une pluralité de séquences de fonctionnement prédéterminées différentes, incluant elles-mêmes chacune une série respective de phases successives.

6. - Ensemble selon la revendication 5 **caractérisé en ce que** ledit module émetteur (5) est capable, lorsqu'il fonctionne en mode dégradé, d'informer par lui-même l'utilisateur, de façon visuelle et/ou sonore, du début et/ou de la fin d'au moins l'une desdites phases de la séquence de fonctionnement prédéterminée que ledit appareil électroménager (1) est en train de mettre en œuvre.

7. - Ensemble selon la revendication 5 ou 6 **caractérisé en ce que** lesdites séquences de fonctionnement prédéterminées sont chacune identifiées par un code d'identification, une séquence de fonctionnement prédéterminée particulière pouvant être sélectionnée au moyen de l'application (APP), laquelle est conçue pour commander la transmission du code d'identification de la séquence de fonctionnement ainsi sélectionnée au module émetteur (5) par l'intermédiaire de ladite connexion sans fil, ledit module émetteur (5) disposant d'une mémoire conçue pour stocker ledit code d'identification, de sorte que le module émetteur (5) dispose localement dudit code d'identification même si la connexion sans fil est ultérieurement interrompue.

8. - Ensemble selon l'une des revendications 5 à 7 **caractérisé en ce que** le module émetteur (5) est capable de procéder à l'identification de la phase en cours de déroulement de la séquence de fonctionnement prédéterminée que ledit appareil électroménager (1) est en train de mettre en œuvre, ledit premier jeu de données et/ou ledit deuxième jeu de données incluant des données représentatives de l'identité de ladite phase en cours de déroulement.

9. - Ensemble selon les revendications 2 et 8 **caractérisé en ce que** ledit signal de reconfiguration inclut lesdites données représentatives de l'identité de ladite phase en cours de déroulement.

10. -Ensemble selon l'une des revendications 5 à 9 **caractérisé en ce que** ledit appareil électroménager (1) est un appareil de cuisson d'aliments sous pression capable de mettre en œuvre une pluralité de cycles de cuisson correspondant à ladite pluralité de séquences de fonctionnement prédéterminées et incluant eux-mêmes chacun une série respective d'étapes de cuisson correspondant à ladite série respective de phases successives, chaque série d'étapes de cuisson incluant au moins une étape de cuisson sous pression au cours de laquelle ledit appareil (1) étant adapté pour réguler la pression régnant en son sein pour qu'elle soit maintenue sensiblement à une valeur de consigne.

11. - Ensemble selon la revendication 10 **caractérisé en ce que** ledit module émetteur (5) incorpore un minuteur conçu pour décompter une durée prédéterminée à partir dudit instant où débute ladite étape de cuisson sous pression.

12. - Ensemble selon la revendication 11 **caractérisé en ce que** la valeur de ladite durée prédéterminée peut être sélectionnée au moyen de l'application (APP), qui est conçue pour commander la transmission de la valeur ainsi sélectionnée au module émetteur (5) par l'intermédiaire de ladite connexion sans fil en mode normal, ledit module émetteur (5) disposant d'une mémoire conçue pour stocker ladite valeur sélectionnée, de sorte que le module émetteur (5) dispose localement de ladite valeur sélectionnée même en mode dégradé.

13. - Procédé d'assistance à l'utilisation d'un appareil électroménager (1) au moyen d'une application (APP) exécutée par un terminal informatique indépendant (4) dont dispose un utilisateur, un module émetteur (5) étant embarqué sur ledit appareil électroménager (1), ledit procédé comprenant l'établissement d'une connexion sans fil entre lesdits application (APP) et module émetteur (5), ledit procédé étant **caractérisé en ce qu'**il met en œuvre une opération de contrôle en vue de détecter une éventuelle rupture de ladite connexion sans fil, ledit module émetteur (5) étant conçu pour fonctionner selon au moins :
- un mode normal, qui est actif tant qu'aucune rupture de ladite connexion sans fil n'est détectée, et selon lequel le module émetteur (5) surveille et/ou récolte et/ou génère un premier jeu de données concernant le fonctionnement de l'appareil électroménager qu'il transmet en partie ou en totalité à l'application (APP), grâce à ladite connexion sans fil, afin que ladite application (APP) utilise au moins certaines des données dudit premier jeu de données pour son exécution; et
- un mode dégradé, qui est actif tant qu'une rupture de ladite connexion sans fil est détectée, et selon lequel le module émetteur (5) surveille et/ou récolte et/ou génère un deuxième jeu de données concernant le fonctionnement de l'appareil électroménager (1) et utilise de façon autonome au moins certaines desdites données du deuxième jeu de données pour communiquer à l'utilisateur, de façon visuelle et/ou sonore, des informations relatives au fonctionnement de l'appareil électroménager (1).

14. -Produit programme d'ordinateur comprenant un moyen de code de programme informatique adapté pour exécuter les étapes d'un procédé conforme à l'objet de la revendication 13 lorsque ledit programme est exécuté par un ordinateur.

## Patentansprüche

1. Montage bestehend aus:
- einem System zur Unterstützung bei der Benutzung eines Haushaltsgeräts (1) mittels einer Anwendung (APP), die angepasst ist, von einem separaten Datenendgerät (4), über das ein Benutzer verfügt, ausgeführt zu werden, wobei das System ein Sendemodul (5) umfasst, das dazu ausgelegt ist, von dem Haushaltsgerät (1) aufgenommen zu werden, sowie Telekommunikationsmittel (12), die dazu ausgelegt sind, eine drahtlose Verbindung zwischen der Anwendung (APP) und dem Sendemodul (5) aufzubauen, wobei das System **dadurch gekennzeichnet ist, dass** es auch ein Regelmittel (13) umfasst, das dazu ausgelegt ist, eine mögliche Unterbrechung der drahtlosen Verbindung zu erkennen, wobei das Sendemodul (5) dazu ausgelegt ist, in mindestens folgenden Betriebsarten zu funktionieren:
- einem Normalbetrieb, der aktiv ist, solange das Regelmittel (13) keine Unterbrechung der drahtlosen Verbindung feststellt, und wobei das Sendemodul (5) angepasst ist, einen ersten Datensatz über die Funktionsweise des Haushaltsgeräts (1) zu überwachen und/oder zu sammeln und/oder zu erzeugen, und angepasst ist, diesen teilweise oder vollständig an die Anwendung (APP) über die drahtlose Verbindung zu übertragen, so dass die Anwendung (APP) zumindest einige der Daten des ersten Datensatzes zu dessen Ausführung verwenden kann; und
- einem eingeschränkten Betrieb, der aktiv ist, solange das Regelmittel (13) eine Unterbrechung der drahtlosen Verbindung und/oder einen Fehler bei der Ausführung der Anwendung (APP) erkennt, und wobei das Sendemodul (5) angepasst ist, einen zweiten Datensatz über die Funktionsweise des Haushaltsgeräts (1) zu überwachen und/oder zu sammeln und/oder zu erzeugen, und angepasst ist, selbstständig mindestens einige der Daten des zweiten Datensatzes zu verwenden, um dem Benutzer visuell und/oder akustisch Informationen über die Funktionsweise des Haushaltsgeräts (1) mitzuteilen,
- dem separaten Datenendgerät (4);
- der Anwendung (APP).

2. Montage nach Anspruch 1, **dadurch gekennzeichnet, dass** das Sendemodul (5) so ausgelegt ist, dass es an die Anwendung (APP), sobald die drahtlose Verbindung nach einer Verbindungsunterbrechung wiederhergestellt ist, mindestens ein Rekonfigurationssignal sendet, das mindestens alle oder einige der Daten des zweiten Datensatzes enthält, wobei die Anwendung (APP) in der Lage ist, die Daten des Rekonfigurationssignals zu verwenden, um den normalen Ablauf ihrer Ausführung wieder aufzunehmen, der durch die Verbindungsunterbrechung unterbrochen worden war.

3. Montage nach Anspruch 1 oder 2, **dadurch gekennzeichnet, dass** das Haushaltsgerät (1) mit einem manuell verstellbaren Steuerungswahlschalter (6) versehen ist, wobei die momentane Position des Steuerungswahlschalters (6) Teil des ersten Datensatzes und/oder des zweiten Datensatzes ist.

4. Montage nach Anspruch 3, **dadurch gekennzeichnet, dass** das Haushaltsgerät (1) ein Gerät zum Kochen von Nahrungsmitteln unter Druck ist, das mit einem tarierten Druckregelventil mit einstellbarer Tarierung versehen ist, wobei der Steuerungswahlschalter (6) dazu bestimmt ist, zumindest die Einstellung der Tarierung des Regelventils manuell zu steuern.

5. Montage nach einem der Ansprüche 1 bis 4, **dadurch gekennzeichnet, dass** das Haushaltsgerät (1) in der Lage ist, eine Vielzahl verschiedener vorbestimmter Funktionsabläufe umzusetzen, die ihrerseits jeweils eine entsprechende Reihe aufeinanderfolgender Phasen einschließen.

6. Montage nach Anspruch 5, **dadurch gekennzeichnet, dass** das Sendemodul (5) in der Lage ist, wenn es in eingeschränktem Betrieb funktioniert, den Benutzer selbstständig visuell und/oder akustisch über den Beginn und/oder das Ende von mindestens einer der Phasen der vorbestimmten Funktionsabfolge, die das Haushaltsgerät (1) gerade durchführt, zu informieren.

7. Montage nach Anspruch 5 oder 6, **dadurch gekennzeichnet, dass** die vorbestimmten Funktionsabläufe jeweils durch einen Identifikationscode identifiziert werden, wobei ein bestimmter vorbestimmter Funktionsablauf über die Anwendung (APP) ausgewählt werden kann, welche dazu ausgelegt ist, die Übertragung des Identifikationscodes des derart ausgewählten Funktionsablaufs an das Sendemodul (5) über die drahtlose Verbindung zu steuern, wobei das Sendemodul (5) über einen Speicher verfügt, der dazu ausgelegt ist, den Identifikationscode zu speichern, so dass das Sendemodul (5) lokal über den Identifikationscode verfügt, selbst wenn die drahtlose Verbindung später unterbrochen wird.

8. Montage nach einem der Ansprüche 5 bis 7, **dadurch gekennzeichnet, dass** das Sendemodul (5) in der Lage ist, die gerade ablaufende Phase des vorbestimmten Funktionsablaufs, den das Haushaltsgerät (1) gerade ausführt, zu identifizieren, wobei der erste Datensatz und/oder der zweite Datensatz Daten enthalten, die für die Identität der gerade ablaufenden Phase repräsentativ sind.

9. Montage nach den Ansprüchen 2 und 8, **dadurch gekennzeichnet, dass** das Rekonfigurationssignal die Daten einschließt, die für die Identität der gerade ablaufenden Phase repräsentativ sind.

10. Montage nach einem der Ansprüche 5 bis 9, **dadurch gekennzeichnet, dass** das Haushaltsgerät (1) ein Gerät zum Kochen von Nahrungsmitteln unter Druck ist, das in der Lage ist, eine Vielzahl von Kochzyklen durchzuführen, die der Vielzahl von vorbestimmten Funktionsabläufen entsprechen und ihrerseits jeweils eine jeweilige Reihe von Kochschritten enthalten, die der jeweiligen Reihe von aufeinanderfolgenden Phasen entsprechen, wobei jede Reihe von Kochschritten mindestens einen Schritt zum Kochen unter Druck enthält, bei dem das Gerät (1) so angepasst ist, dass es den in seinem Inneren herrschenden Druck so regelt, dass er im Wesentlichen auf einem Sollwert gehalten wird.

11. Montage nach Anspruch 10, **dadurch gekennzeichnet, dass** das Sendemodul (5) einen Timer enthält, der so ausgelegt ist, dass er eine vorbestimmte Zeitdauer ab dem Zeitpunkt herunterzählt, an dem der Schritt des Kochens unter Druck beginnt.

12. Montage nach Anspruch 11, **dadurch gekennzeichnet, dass** der Wert der vorbestimmten Zeitdauer über die Anwendung (APP) ausgewählt werden kann, die dazu ausgelegt ist, die Übertragung des derart ausgewählten Wertes an das Sendemodul (5) über die drahtlose Verbindung im Normalbetrieb zu steuern, wobei das Sendemodul (5) über einen Speicher verfügt, der dazu ausgelegt ist, den ausgewählten Wert zu speichern, so dass das Sendemodul (5) selbst im eingeschränkten Betrieb lokal über den ausgewählten Wert verfügt.

13. Verfahren zur Unterstützung bei der Benutzung eines Haushaltsgeräts (1) mittels einer Anwendung (APP), die von einem separaten Datenendgerät (4) ausgeführt wird, über das ein Benutzer verfügt, wobei ein Sendemodul (5) von dem Haushaltsgerät (1) aufgenommen wird, wobei das Verfahren den Aufbau einer drahtlosen Verbindung zwischen der Anwendung (APP) und dem Sendemodul (5) umfasst, wobei das Verfahren **dadurch gekennzeichnet ist, dass** es einen Regelvorgang durchführt, um eine mögliche Unterbrechung der drahtlosen Verbindung zu erkennen, wobei das Sendemodul (5) dazu ausgelegt ist, in mindestens folgenden Betriebsarten zu funktionieren:
- einem Normalbetrieb, der aktiv ist, solange keine Unterbrechung der drahtlosen Verbindung feststellt wird, und wobei das Sendemodul (5) einen ersten Datensatz über die Funktionsweise des Haushaltsgeräts überwacht und/oder sammelt und/oder erzeugt, den es teilweise oder vollständig über die drahtlose Verbindung an die Anwendung (APP) überträgt, so dass die Anwendung (APP) zumindest einige der Daten des ersten Datensatzes zu dessen Ausführung verwendet; und
- einem eingeschränkten Betrieb, der aktiv ist, solange eine Unterbrechung der drahtlosen Verbindung erkannt wird, und wobei das Sendemodul (5) einen zweiten Datensatz über die Funktionsweise des Haushaltsgeräts (1) überwacht und/oder sammelt und/oder erzeugt, und selbstständig mindestens einige der Daten des zweiten Datensatzes verwendet, um dem Benutzer visuell und/oder akustisch Informationen über die Funktionsweise des Haushaltsgeräts (1) mitzuteilen.

14. Computerprogrammprodukt, das ein Mittel zum Codieren eines Computerprogramms umfasst, das angepasst ist, die Schritte eines Verfahrens gemäß dem Gegenstand von Anspruch 13 auszuführen, wenn das Programm von einem Computer ausgeführt wird.

## Claims

1. Assembly comprising:
- a system for assisting the use of an electric domestic appliance (1) by means of an application (APP) adapted to be executed by an independent computer terminal (4) available to a user, said system comprising an emitter module (5) designed to be embedded on said electric domestic appliance (1), as well as telecommunication means (12) designed to establish a wireless connection between said application (APP) and emitter module (5), said system being **characterised in that** it also comprises a control means (13) designed to detect a possible break in said wireless connection, said emitter module (5) being designed to operate according to at least:
- a normal mode, which is active as long as said control means (13) does not detect any break in said wireless connection, and according to which the emitter module (5) is adapted to monitor and/or gather and/or generate a first set of data relating to the operation of the electric domestic appliance (1) for which it is adapted to partially or fully transmit to the application (APP), thanks to said wireless connection, such that said application (APP) can use at least some of the data from said first set of data for its execution; and
- a degraded mode, which is active as said control means (13) detects a break in said wireless communication and/or an execution failure of the application (APP), and according to which the emitter module (5) is adapted to monitor and/or gather and/or generate a second set of data relating to the operation of the electric domestic appliance (1) and is adapted to autonomously use at least some of said data of the second set of data to communicate to the user, visually and/or by sound, information relating to the operation of the electric domestic appliance (1),
- said independent computer terminal (4);
- and said application (APP).

2. Assembly according to claim 1, **characterised in that** said emitter module (5) is designed to transmit to said application (APP), as soon as said wireless connection is reestablished after a break in connection, at least one reconfiguration signal including at least all or some of said data of said second set of data, said application (APP) being capable of using the data of said reconfiguration signal to resume the normal path of its execution which has been interrupted by said break in connection.

3. Assembly according to claim 1 or 2, **characterised in that** said electric domestic appliance (1) is equipped with a control selector (6) which can be manually moved, the immediate position of said control selector (6) forming part of the first set of data and/or of the second set of data.

4. Assembly according to claim 3, **characterised in that** said electric domestic appliance (1) is a pressurised food cooking appliance provided with a balanced pressure regulation valve with adjustable balancing, the control selector (6) being intended to manually control at least the adjustment of the balancing of said regulation valve.

5. Assembly according to one of claims 1 to 4, **characterised in that** said electric domestic appliance (1) is capable of implementing a plurality of different predetermined operating sequences, themselves each including a respective series of successive phases.

6. Assembly according to claim 5, **characterised in that** said emitter module (5) is capable, when it operates in degraded mode, to inform the user by itself, visually and/or by sound, from the start and/or from the end of at least one of said phases of the predetermined operating sequence that said electric domestic appliance (1) is in the process of implementing.

7. Assembly according to claim 5 or 6, **characterised in that** said predetermined operating sequences are each identified by an identification code, a particular predetermined operating sequence which could be selected by means of the application (APP), which is designed to control the transmission of the identification code of the operating sequence thus selected to the emitter module (5) by way of said wireless connection, said emitter module (5) having a memory designed to store said identification code, such that the emitter module (5) locally has said identification code, even if the wireless connection is subsequently interrupted.

8. Assembly according to one of claims 5 to 7, **characterised in that** the emitter module (5) is capable of proceeding with the identification of the current running phase of the predetermined operating sequence that said electric domestic appliance (1) is in the process of implementing, said first set of data and/or said second set of data including data representative of the identity of said current running phase.

9. Assembly according to claim 2 and 8, **characterised in that** said reconfiguration signal includes said data representative of the identity of said current running phase.

10. Assembly according to one of claims 5 to 9, **characterised in that** said electric domestic appliance (1) is a pressurised food cooking appliance capable of implementing a plurality of cooking cycles corresponding to said plurality of predetermined operating sequences and themselves each including a respective series of cooking steps corresponding to said respective series of successive phases, each series of cooking steps including at least one pressurised cooking step during which said appliance (1) is adapted to regulate the pressure within it such that it is kept substantially at a setpoint value.

11. Assembly according to claim 10, **characterised in that** said emitter module (5) incorporates a timer designed to count a predetermined duration from said instant where said pressurised cooking step starts.

12. Assembly according to claim 11, **characterised in that** the value of said predetermined duration can be selected by means of the application (APP), which is designed to control the transmission of the value thus selected to the emitter module (5) by way of said wireless connection in normal mode, said emitter module (5) having a memory designed to store said value selected, such that the emitter module (5) locally has said value selected even in degraded mode.

13. Method for assisting the use of an electric domestic appliance (1) by means of an application (APP) executed by an independent computer terminal (4) available to a user, an emitter module (5) being embedded on said electric domestic appliance (1), said method comprising the establishment of a wireless connection between said application (APP) and emitter module (5), said method being **characterised in that** it implements a control operation in view of detecting a possible break in said wireless connection, said emitter module (5) being designed to operate according to at least:
- a normal mode, which is active as no break in said wireless connection is detected, and according to which the emitter module (5) monitors and/or gathers and/or generates a first set of data relating to the operation of the electric domestic appliance that it partially or fully transmits to the application (APP), thanks to said wireless connection, such that said application (APP) uses at least some of the data of said first set of data for its execution; and
- a degraded mode, which is active as a break in said wireless connection is detected, and according to which the emitter module (5) monitors and/or gathers and/or generates a second set of data relating to the operation of the electric domestic appliance (1) and autonomously uses at least some of said data of the second set of data to communicate to the user, visually and/or by sound, information relating to the operation of the electric domestic appliance (1).

14. Computer program product comprising a computer program code means adapted to execute the steps of a method according to the subject matter of claim 13 when said program is executed by a computer.
